# EUROPÄISCHE PATENTANMELDUNG

(11) **EP 2 871 143 A2**
(43) Veröffentlichungstag der Anmeldung: **13.05.2015**
(21) Anmeldenummer: 14184982.8
(22) Anmeldetag: 15.07.2011
(51) Int. Cl.: B65G 13/10, B65G 47/54

(54) **TRANSFER-FÖRDERVORRICHTUNG**

(30) Priorität: 16.07.2010 AT 12112010
(62) Teilanmeldung aus: 11757525.8
(71) Anmelder: TGW Mechanics GmbH, 4600 Wels (AT)
(72) Erfinder: Wolkerstorfer, Christoph, 4600 Wels (AT); Wolkerstorfer, Markus, 4174 Niederwaldkirchen (AT)
(74) Vertreter: Burger, Hannes

(57) **Zusammenfassung**

Die Erfindung beschreibt eine Transfer-Fördervorrichtung (1) mit einem Fördermodul (15), einem Basismodul (16), Förderröllchen (14) für den Transport eines Transportguts in eine Hauptförderrichtung oder eine Nebenförderrichtung, einer Schwenk-Antriebsanordnung (52) und einem Schwenk-Übertragungsmittel (42) zum Schwenken der Förderröllchen und einer Röllchen-Antriebsanordnung (51) und einem Antriebs-Übertragungsmittel (43) zum Antrieb der Förderröllchen. Das Fördermodul bildet ein Traggestell (19) mit einer Reihe von Förderröllchen, das Schwenk-Übertragungsmittel zum Schwenken der Förderröllchen in dieser Reihe und das Antriebs-Übertragungsmittel zum Antrieb der Förderröllchen in dieser Reihe aus. Das Antriebs-Übertragungsmittel umfasst eine Treibwelle (44). Das Basismodul umfasst die Schwenk-Antriebsanordnung, die Röllchen-Antriebsanordnung und entweder einen Elektromotor oder eine Antriebsscheibe. Die Treibwelle ist über eine mechanische Kupplung mit der Antriebsscheibe oder dem Elektromotor antriebsverbunden. Oder das Fördermodul umfasst eine Übertriebsrolle, welche über einen Riemen mit der Treibwelle gekuppelt ist, wobei die Übertriebsrolle über eine mechanische Kupplung mit der Antriebsscheibe oder dem Elektromotor antriebsverbunden ist.

## Beschreibung

Die Erfindung betrifft eine Transfer-Fördervorrichtung mit einem Fördermodul, einem Basismodul, eine Förderebene ausbildenden Förderröllchen für den Transport eines Transportguts in eine Hauptförderrichtung oder eine Nebenförderrichtung, einer Schwenk-Antriebsanordnung und einem Schwenk-Übertragungsmittel zum Schwenken der Förderröllchen um zur Förderebene senkrecht verlaufenden Schwenkachsen und einer Röllchen-Antriebsanordnung und einem Antriebs-Übertragungsmittel zum Antrieb der Förderröllchen, wobei jedes Förderröllchen über einen Lagerzapfen zwischen Lagerschenkel eines um die Schwenkachse schwenkbaren Röllchenträgers gelagert und um eine zur Schwenkachse senkrecht ausgerichtete Drehachse drehbar ist und wobei das Fördermodul mit dem Basismodul trennbar verbunden ist, welches Basismodul die Schwenk-Antriebsanordnung und die Röllchen-Antriebsanordnung umfasst, wobei ein Traggestell zumindest eine quer zur Hauptförderrichtung angeordnete Reihe von Förderröllchen, das Schwenk-Übertragungsmittel zum Schwenken der Förderröllchen in dieser Reihe und das Antriebs-Übertragungsmittel zum Antrieb der Förderröllchen in dieser Reihe das Fördermodul ausbildet.

Aus der JP 59 031211 A, EP 1 375 389 A1, US 4,598,815 A, EP 1 323 647 A1, US 5,145,049 A, DE 24 23 138 A1, DE 20 2005 015 544 U1, US 5,971,133 A, FR 2 852 940 A1 und US 2005/0040009 A1 ist eine Transfer-Fördervorrichtung mit einem Fördermodul, einem Basismodul, eine Förderebene ausbildende Förderröllchen für den Transport eines Transportguts in eine Hauptförderrichtung oder eine Nebenförderrichtung, zumindest einer Schwenk-Antriebsanordnung und einem Schwenk-Übertragungsmittel zum Schwenken der Förderröllchen um zur Förderebene senkrecht verlaufenden Schwenkachsen und zumindest einer Röllchen-Antriebsanordnung und einem Antriebs-Übertragungsmittel zum Antrieb der Förderröllchen, wobei jedes Förderröllchen an einem um die Schwenkachse drehbaren Röllchenträger gelagert ist.

Die EP 0 956 249 B1 offenbart eine Transfer-Fördervorrichtung mit eine Förderebene ausbildenden Förderrollen für den Transport eines Transportguts in eine Hauptförderrichtung oder eine Nebenförderrichtung, zumindest einer Schwenk-Antriebsanordnung und einem Schwenk-Übertragungsmittel zum Schwenken der Förderrollen um zur Förderebene senkrecht verlaufenden Schwenkachsen und zumindest einer Rollen-Antriebsanordnung und einem Antriebs-Übertragungsmittel zum Antrieb der Förderrolle, wobei jede Förderrolle an einem um die Schwenkachse drehbaren Rollenträger gelagert ist. Die Rollen-Antriebsanordnung (Antriebsrolle 24) und Schwenk-Antriebsanordnung (Zylinder 32) sind am Rahmen der Fördervorrichtung gelagert, daher am Basismodul angeordnet. Jede der zwei schwenkbaren Förderrollen in einer Reihe ist über ein eigenes Antriebs-Übertragungsmittel (Antriebsriemen 26) mit der dieser Reihe zugeordneten Antriebsrolle gekoppelt.

Aus der US 3,983,988 A ist eine Transfer-Fördervorrichtung mit eine Förderebene ausbildenden, angetriebenen und um zur Förderebene senkrecht verlaufenden Schwenkachsen schwenkbaren Förderröllchen für die Förderung eines Transportguts in eine Hauptförderrichtung und die Ein- und Ausschleusung in Nebenförderrichtungen bekannt. Dieser Transfer-Fördervorrichtung weist in einem Rahmengestell angetriebene Transportrollen für die Hauptförderrichtung auf. Zwischen diesen sind Reihen von über eine Förderbreite verteilt angeordneten, gemeinsam angetriebenen und um zu einer Förderebene senkrecht verlaufende Schwenkachsen schwenkbaren Förderröllchen vorgesehen wobei jeder Reihe ein Schwenkantrieb zugeordnet ist.

Aus einem weiteren Dokument US 7,681,710 B2 ist eine Transfer-Fördervorrichtung mit gemeinsam angetriebenen, eine Förderebene für ein Transportgut ausbildenden Förderrollen für einen Hauptförderweg bekannt. In einem Ein- und Ausschleusbereich für das Transportgut von bzw. zu einem Nebenförderweg sind in einem vergrößerten Zwischenraum der Förderrollen in einem Tragrahmen lösbar und mit einer gemeinsamen Antriebswelle reibschlüssig kuppelbar Bandfördermodule angeordnet, welche mit einer zu dem Hauptförderweg senkrecht verlaufenden Förderrichtung betrieben werden. Der Tragrahmen ist mit den Bandfördermodulen und mit der Antriebswelle in zur Förderebene der Förderrollen senkrechter Richtung verstellbar in einem Grundgestell des Transferförderers angeordnet.

Aufgabe der Erfindung ist es eine Transfer-Fördervorrichtung als in ein Fördersystem für Transportgut integrierbare Baueinheit für variierbare Förderrichtungen zu schaffen, welche aus den Wartungsaufwand vereinfachenden Baugruppen gebildet ist.

Diese Aufgabe der Erfindung wird dadurch gelöst, dass das Traggestell zwischen Seitenschenkel des Basismoduls positionierte und mit diesen lösbar verbundene Stirnbleche sowie eine zwischen diesen erstreckende Tragleiste umfasst, und
das Antriebs-Übertragungsmittel zum Antrieb der Förderröllchen eine Treibwelle und Übertragungsmittel umfasst, wobei sich die Treibwelle an einer Unterseite der Tragleiste zwischen den Stirnblechen des Traggestells erstreckt und an den Stirnblechen gelagert ist, und
das Basismodul entweder einen Elektromotor oder eine Antriebsscheibe umfasst, wobei die Antriebsscheibe in einem am Basismodul angeordneten Kupplungsgehäuse drehbar gelagert ist, und dass
a) entweder die Treibwelle über eine mechanische Kupplung lösbar mit einer Antriebsscheibe antriebsverbunden ist,
b) oder das Fördermodul zusätzlich eine Übertriebsrolle umfasst, welche in einem am Fördermodul angeordneten Kupplungsgehäuse drehbar gelagert und über einen umlaufenden Riemen mit der Treibwelle gekuppelt ist, wobei die Übertriebsrolle über eine mechanische Kupplung lösbar mit der Antriebsscheibe oder lösbar mit dem Elektromotor antriebsverbunden ist.

Dementsprechend kann die Treibwelle oder die Übertriebsrolle über die mechanische Kupplung mit der Antriebsscheibe lösbar antriebsverbunden werden. Andererseits kann die Treibwelle bzw. die Übertriebsrolle über die mechanische Kupplung mit einem Antrieb, z.B. Elektromotor, gekuppelt werden. Der Vorteil dabei ist, dass durch die bauliche Trennung in ein Fördermodul und ein Antriebsmodul bei einer einheitlichen Konzeption des, die schwenkbaren Förderröllchen aufweisenden Fördermoduls, eine Anzahl von Kombinationsmöglichkeiten mit anwenderspezifisch ausgelegten Antriebssystemen der Fördereinrichtungen eines Fördersystems erreicht werden und der Wartungs- und Instandhaltungsaufwand vereinfacht wird. Darüber hinaus ist durch die Anordnung einer mechanischen Kupplung für Wartungs- und Instandhaltungszwecke eine rasche Trennung der Antriebsverbindung des Röllchenantriebes zwischen den Komponenten des Basismoduls und Komponenten des Fördermoduls möglich. Auf diese Weise können unterschiedliche und an das jeweilige Fördersystem anpassbare Antriebslösungen in Kombination mit Rollenförderantriebe, Bandantriebe, Einzelantriebe konzipiert werden.

Es ist von Vorteil, wenn das Fördermodul mehrere parallele und zueinander gering beabstandete, über eine Förderbreite erstreckende Reihen von Förderröllchen aufweist, weil dadurch der Fertigungs- und Montageaufwand reduziert wird.

Ist den Reihen eine gemeinsame, mit den Antriebs-Übertragungsmitteln kuppelbare Röllchen-Antriebsanordnung im Basismodul zugeordnet, werden die Anzahl der Antriebsverbindungen reduziert und Antriebsmittel eingespart.

Nach einer Ausführung der Erfindung ist es vorgesehen, dass den Reihen eine gemeinsame, mit den Schwenk-Übertragungsmitteln kuppelbare Schwenk-Antriebsanordnung im Basismodul zugeordnet ist. Dadurch wird eine Gruppenbildung von gemeinsam mit nur einer Schwenk-Antriebsanordnung und um einen gleichen Winkelbetrag schwenkbaren Reihen erreicht. Ferner kann die Anzahl der im Fördermodul angeordneten Reihen in Abhängigkeit der Transportanforderungen ausgelegt werden.

Auch erweist sich von Vorteil, wenn das Fördermodul und das Basismodul zusammenwirkende, kulissenförmige Zentriermittel und Verbindungsmittel aufweisen, womit kurze Zugriffszeiten zu den einzelnen Bauelementen des Fördermoduls erreicht werden, sodass auch instandhaltungs- und wartungsbedingte Ausfallzeiten des Fördersystems wesentlich reduziert und Kosten eingespart werden.

Es ist auch vorteilhaft, wenn das Förderröllchen durch ein, zwei Laufringe ausbildendes Tandemröllchen gebildet ist und zwischen den Laufringen eine Nut für ein schnurförmiges Übertragungsmittel angeordnet ist. Dadurch wird eine Auflageverteilung des Transportguts auf ein Paar von Laufringen und eine schonende Förderung des Transportguts erreicht.

Von Vorteil erweist sich auch eine Ausführung, bei der das Tandemröllchen über Lagerzapfen zwischen Lagerschenkeln in einem Röllchenträger und um eine zur Schwenkachse senkrecht ausgerichtete Drehachse drehbar gelagert ist, wobei der Röllchenträger in einer Lagerbüchse einer Tragleiste des Traggestells schwenkbar gelagert ist. Der Röllchenträger kann dabei mit einem rohrförmigen Lagerfortsatz in einer die Schwenkachse ausbildenden und in einer Bohrung der Tragleiste angeordneten Lagerbüchse schwenkbar gelagert werden. Dabei kann der Lagerfortsatz die Lagerbüchse durchragen und einer Unterseite der Tragleiste zugeordnet am Lagerfortsatz und mit diesem antriebsverbunden ein Zahnring angeordnet werden. Auch kann die Reihe der Förderröllchen über einen gemeinsamen, mit den Zahnringen in Eingriff stehenden Zahnriemen antriebsverbunden werden. Der Zahnriemen kann über einen Riemenverbinder mit einem die Schwenk-Antriebsanordnung aufweisenden Mitnehmermittel gekuppelt werden. Das Schwenk-Übertragungsmittel ist somit einfach aufgebaut, die Anzahl der zum Schwenken der Förderröllchen bzw. Röllchenträger erforderlichen Mittel gering, sodass für das Fördermodul eine kompakte Bauform erreicht wird. Ebenso ist ein verschleißarmer Langzeitbetrieb möglich.

Die Schwenk-Antriebsanordnung ist vorzugsweise durch einen Linearstelltrieb gebildet. Der Linearstelltrieb ist ein mit Druckmedium beaufschlagbarer und eine Mittelstellung sowie zwei entgegengesetzte Endstellungen aufweisender Aktuator, wie eine doppelt wirkende Zylinderanordnung. Mit dieser Anordnung können Winkelstellungen exakt vorgegeben werden. Zudem sind diese Komponenten technisch ausgereift und für eine hohe Anzahl von Schaltspielen bestens geeignet.

Möglich ist eine Ausbildung, bei der eine Übersetzung eines Verstellweges zwischen Endstellungen des Linearstelltriebes für einen Schwenkwinkel der Förderröllchen um die Schwenkachse für etwa 180° ausgelegt ist. Damit wird eine unterschiedliche Auslegung von Schwenkwinkeln erreicht und können Ein- und Ausschleusvorgänge für das Transportgut in Abhängigkeit der Transportvorgaben und der Auslegung des gesamten Fördersystems optimiert werden.

Ist zwischen jeweils benachbarten Reihen der Förderröllchen über die Förderbreite ersteckend, jeweils zumindest eine angetriebene Förderrolle angeordnet, können weitere Varianten im Transferablauf erreicht werden.

Von Vorteil ist auch, wenn eine Drehachse der Treibwelle und die Schwenkachsen der Förderröllchen in der Reihe in einer gemeinsamen Ebene verlaufen. Dadurch wird eine einheitliche Bauform für die nur eine oder auch mehrere Reihen der Förderröllchen aufweisenden Fördermodule erreicht.

Es erweist sich auch als günstig, wenn die Treibwelle mit jeweils den Schwenkachsen der Röllchenträger zugeordnete, ringförmige Einschnürungen für jeweils ein Übertragungsmittel umfasst. Es ist dann auch von Vorteil, wenn die Förderröllchen jeweils als zwei Laufringe aufweisende Tandemröllchen mit zwischen den Laufringen ringförmige ausgebildeter Nut ausgebildet sind, wobei die Tandemröllchen mit der Treibwelle über jeweils an den Nuten und den Einschnürungen geführte endlose, schnurförmige Übertragungsmittel gekuppelt sind. Dadurch wird eine exakte Zentrierung eines Übertragungsmittels für den Antrieb der Förderröllchen in Bezug auf die Schwenkachse erreicht wird. Auch kann es sich von Vorteil erweisen, wenn die Laufringe der Förderröllchen mit einer einen hohen Reibbeiwert aufweisenden Beschichtung, z. B. aus Polyurethan, versehen sind oder eine formschlüssige Struktur, z.B. eine geränderte Oberfläche aufweisen.

Eine sichere Übertragung der für die Förderung des Transportguts erforderlichen Vortriebskraft kann erreicht werden, wenn die von den Förderröllchen gebildete Förderebene der Transfer-Fördervorrichtung geringfügig oberhalb einer Förderebene benachbarter Förderer des Fördersystems, z.B. Rollen-, Band- Kettenförderer etc., verläuft.

Gemäß einer Ausbildung der Erfindung ist es vorgesehen, dass die Antriebsscheibe mit einem in axialer Richtung im Kupplungsgehäuse verstellbar gelagerten Kupplungsbolzen antriebsverbunden ist. Dabei kann der Kupplungsbolzen und die Übertriebsrolle bevorzugt über eine stirnseitige Klauenverbindung gekuppelt werden. Auch kann der Kupplungsbolzen über eine Federanordnung in Eingriffsstellung der Klauenverbindung vorgespannt werden. Dadurch ist eine hohe Sicherheit für eine störungsfreie Übertragung des Antriebsmomentes für den Förderröllchen-Antrieb gegeben.

Vorteilhaft ist auch eine Ausbildung, nach welcher das Förderröllchen ein zwei Laufringe aufweisendes Tandemröllchen mit zwischen den Laufringen ringförmig ausgebildeter Nut für ein schnurförmiges Übertragungsmittel ist und dass am Röllchenträger ein Abdeckelement angeordnet ist, das mit Durchbrüchen für einen Überstand eines Teilbereiches des Laufringes des Tandemröllchens versehen ist. Das Abdeckelement ist gemeinsam mit dem Röllchenträger schwenkbar. Dadurch wird in Kombination mit einer Deckplatte eine dichte Abdeckung der Transfer-Fördervorrichtung erreicht und werden Störungen durch Verschmutzung weitestgehend vermieden.

Die Transfer-Fördervorrichtung kann sehr einfach in ein Fördersystem für Transportgut als Baueinheit integriert werden. Es erweist sich auch von Vorteil, wenn eine Antriebsscheibe der Transfer-Fördervorrichtung über eine Riemenanordnung mit den vorgeordneten und nachgeordneten, angetriebenen Förderern, z.B. Bandförderer, Rollenförderer, antriebsverbunden ist.

Zum besseren Verständnis der Erfindung wird diese anhand der nachfolgenden Figuren näher erläutert.

Es zeigen jeweils in stark schematisch vereinfachter Darstellung:
- Fig. 1: ein Fördersystem mit einer erfindungsgemäßen Transfer-Fördervorrichtung in schematischer Ansicht;
- Fig. 2: die Transfer-Fördervorrichtung geschnitten gemäß den Linien II - II in Fig. 1; Transfer-Fördervorrichtung;
- Fig. 3: die Transfer-Fördervorrichtung nach Fig. 2 in getrenntem Zustand der Komponenten Fördermodul und Basismodul;
- Fig. 4: ein Detailausschnitt der Transfer-Fördervorrichtung geschnitten gemäß den Linien IV-IV in Fig. 2;
- Fig. 5: eine Detaildraufsicht auf die Schwenk-Antriebsanordnung der erfindungsgemäßen Transfer-Fördervorrichtung;
- Fig. 6: eine Kupplung der Röllchen-Antriebsanordnung der erfindungsgemäßen Transfer-Fördervorrichtung, geschnitten;
- Fig. 7: eine mögliche Röllchen-Antriebsanordnung in vereinfachter Darstellung;
- Fig. 8: eine weitere, mögliche Röllchen-Antriebsanordnung in vereinfachter Darstellung;
- Fig. 9: eine andere, mögliche Röllchen-Antriebsanordnung in vereinfachter Darstellung;
- Fig. 10 bis Fig. 17: zeigen beispielshaft Varianten von möglichen Transferverfahren beim Betrieb von Fördersystemen mit der erfindungsgemäßen Transfer-Fördervorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

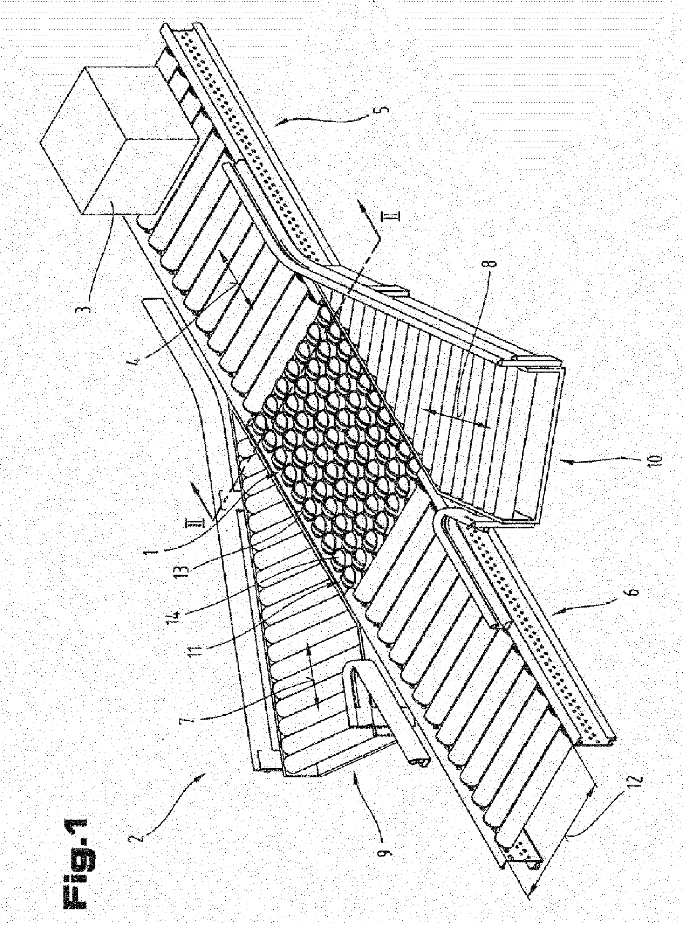

In der Fig. 1 ist eine Transfer-Fördervorrichtung 1 eines verzweigten Fördersystems 2 für Transportgüter 3 gezeigt. Das beispielhaft gezeigte Fördersystem 2 wird durch einen Haupt-förderweg - gemäß Doppelpfeil 4 - ausbildende Rollenförderer 5, 6, mit der zwischen diesen angeordneten Transfer-Fördervorrichtung 1, und zwei in einem Winkel aus dem Bereich der Transfer-Fördervorrichtung 1 abzweigende und Nebenförderwege - gemäß Doppelpfeil 7, 8-ausbildende Rollenbahnschleusen 9, 10 gebildet.

Selbstverständlich können anstelle der gezeigten Rollenförderer 5, 6 und/oder Rollenbahnschleusen 9, 10 auch andere Förderer, z.B. Röllchen-, Band-, Riemen- oder Kettenförderer etc. für die Haupt- und Nebenförderwege zum Einsatz gelangen.

Die Transfer-Fördervorrichtung 1 wird durch mehrere Reihen 11 über eine Förderbreite 12 verteilter, eine Förderebene 13 für das Transportgut 3 ausbildende Förderröllchen 14 gebildet. Die Förderröllchen sind je Reihe 11 gemeinsam angetrieben und um senkrecht zu der Förderebene 11 ausgerichtete Schwenkachsen schwenkbar und leiten je nach Schwenkstellung das Transportgut 3 längs des Hauptförderweges oder zwischen diesem und den Nebenförderwegen über das Fördersystem 2.

Je nach Auslegung der Förderrichtung des gezeigten Fördersystems 2 ist die Transferfördervorrichtung 1 für einen Ausschleusvorgang des Transportguts 3 aus dem Hauptförderweggemäß Doppelpfeil 4 - in die Nebenförderwege - gemäß Doppelpfeile 7, 8 oder bei umgekehrter Transportrichtung für einen Einschleusvorgang des Transportguts 3 aus den Nebenförderwegen - gemäß Doppelpfeile 7, 8 in den Hauptförderweg - gemäß Doppelpfeil 4 - geeignet.

Auf weitere Detailausbildungen, wie sie für ein derartiges Fördersystem 2 bekannt sind, zum Beispiel Tragkonstruktionen, Antriebe, Leiteinrichtungen etc., braucht nicht weiters eingegangen zu werden, da sie in vielfachen, unterschiedlichen Ausbildungsformen aus dem Stand der Technik bekannt sind.

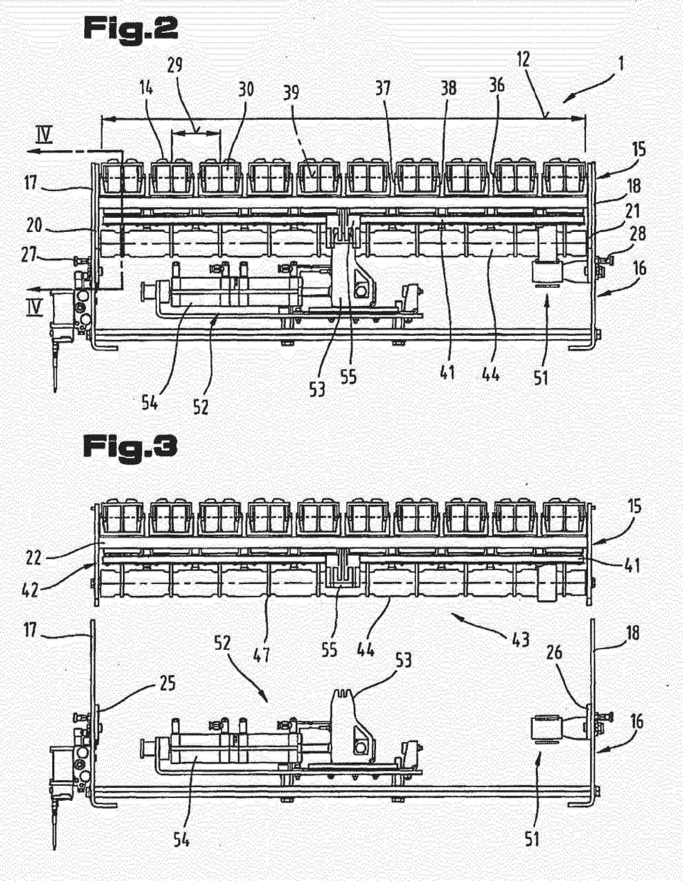

In den Fig. 2 bis 4 ist die erfindungsgemäße Transfer-Fördervorrichtung 1, bestehend aus einem Fördermodul 15 und einem Basismodul 16, welche getrennte, kuppelbare Baueinheiten bilden, gezeigt.

Das Basismodul 16 ist durch eine wannenförmige Blechkonstruktion gebildet und weist in der Förderbreite 12 distanzierte Seitenschenkel 17, 18 auf, zwischen denen das Fördermodul 15 gehalten ist.

Im gezeigten Ausführungsbeispiel besteht das Fördermodul 15 aus drei der Reihen 11 der Förderröllchen 14, die in einem Traggestell 19 als Reihengruppe zusammengefasst sind. Das Traggestell 19 umfasst zwei zwischen den Seitenschenkeln 17, 18 positionierbare und mit diesen lösbar verbindbare Stirnbleche 20, 21 sowie eine zwischen diesen erstreckende und jeweils eine der Reihen 11 der Förderröllchen 14 aufnehmende Tragleiste 22.

Positioniert wird das Traggestell 19 zwischen den Seitenschenkeln 17, 18 über winkelig zueinander verlaufende Positionierflächen 23, 24 der Stirnbleche 20, 21 und durch an den Seitenschenkeln 17, 18 angeordnete Positionierkulissen 25, 26.

Eine lösbare Befestigung des Traggestells 19 an den Seitenschenkeln 17, 18 erfolgt über Befestigungsmittel 27, 28, z.B. Schrauben, Bolzen, Riegel etc.

Nach einem Lösevorgang der Befestigungsmittel 27, 28 kann das, im gezeigten Ausführungsbeispiel drei Reihen 11 der Förderröllchen 14 aufweisende Fördermodul 15 aus dem Basismodul 16 in seiner Gesamtheit nach oben hin - wie in der Fig. 3 gezeigt - bei Bedarf, z.B. für eine Wartungs- oder Reparaturmaßnahme, ohne weiteren Eingriff in das Fördersystem 2 entnommen und wieder eingesetzt werden.

Die Gruppenbildung aus mehreren Reihen 11 zu dem Fördermodul 15 ist nur beispielshaft zu betrachten und kann das Fördermodul 15 durchaus auch nur eine Reihe 11 mit den Förderröllchen 14 oder auch eine Gruppe mit mehr als drei der Reihen 11 aufweisen.

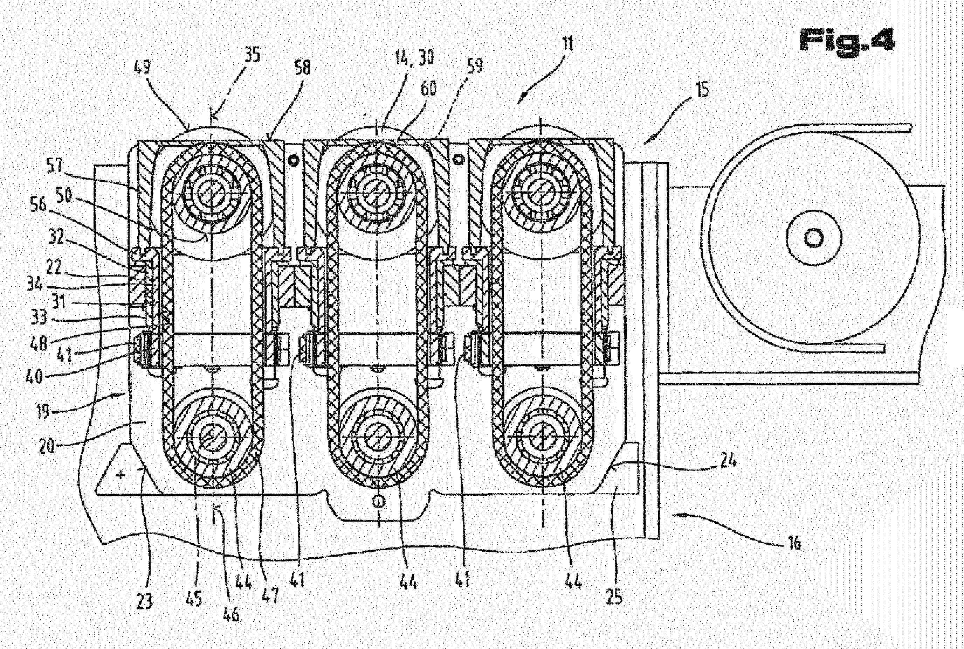

Betrachtet man nunmehr eine der Reihen 11 des Fördermoduls 15, gemäß den Fig. 3 und 4, besteht diese einerseits aus der zwischen Stirnblechen 20, 21 erstreckenden Tragleiste 22 und über die Förderbreite 12 in einem Mittelabstand 29 verteilt angeordneten Förderröllchen 14, die als Tandemröllchen 30 ausgebildet sind. Die Tragleiste 22 ist mit Bohrungen 31 versehen, in welchen Lagerbüchsen 32 als Gleitlager angeordnet sind, in denen über einen rohrförmigen Lagerfortsatz 33 Röllchenträger 34 um eine zur Förderebene 13 senkrecht verlaufende Schwenkachse 35 schwenkbar gelagert sind.

Die Tandemröllchen 30 sind über Lagerzapfen 36 zwischen Lagerschenkeln 37, 38 des Röllchenträgers 34 angeordnet und um eine zu der Schwenkachse 35 senkrecht ausgerichtete Drehachse 39 drehbar gelagert. Der Lagerfortsatz 33 durchragt die Lagerbüchse 32 und an dem ausragenden Endbereich des Lagerfortsatzes 33 ist ein Zahnring 40 befestigt.

Eine Antriebsverbindung sämtlicher Zahnringe 40 der Reihe 11 wird durch einen über die Zahnringe 40 geführten Zahnriemen 41 bewerkstelligt, und damit bei einer Verstellung des Zahnriemens 41 ein gemeinsamer Schwenkvorgang aller Röllchenträger 34 und damit ein Schwenk-Übertragungsmittel 42 erreicht, das längs einer Unterseite der Tragleiste 22 verläuft.

Weiters weist das Fördermodul 15 ein Antriebs-Übertragungsmittel 43 auf. Dieses wird durch eine unterhalb des Zahnriementriebs zwischen den Stirnblechen 20, 21 erstreckenden und in Lageranordnungen drehbar gelagerten Treibwelle 44 gebildet. Eine Drehachse 45 der Treibwelle 44 erstreckt sich in einer zwischen den Schwenkachsen 35 der Reihe 11 aufgespannten Ebene 46.

Die Treibwelle 44 weist im Bereich der Schwenkachsen 35 ringförmige Einschnürungen auf und erfolgt der Antrieb der Tandemröllchen 30 über endlose, schnurförmige Übertragungsmittel 47, die von der Treibwelle 44 durch eine Bohrung 48 des rohrförmigen Lagerfortsatzes 33 des Röllchenträgers 34 hindurchgeführt und über eine zwischen zwei Laufringen 49 des Tandem-Röllchens 30 ausgebildete, umlaufende ringförmige Nut 50 geführt sind.

Durch die Elastizität des Übertragungsmittels 47 ist ein Schwenken der Förderröllchen 14 um die Schwenkachsen 35 ausgehend von einer Mittellage auf nahezu +/- 90° möglich, wobei es zu einer Verschränkung der Förderstränge des Übertragungsmittels 47 kommt.

Die im Fördermodul 15 angeordnete und gelagerte Treibwelle 44 mit den Übertragungsmitteln 47 bilden somit das Antriebs-Übertragungsmittel 43 des Fördermoduls 15.

Ein Antrieb der Treibwelle 44 erfolgt über eine Röllchen-Antriebsanordnung 51 des Basismoduls 16, wozu es, wie noch später im Detail beschrieben, mehrere Ausführungsvarianten gibt.

Ebenfalls ist im Basismodul 16 zumindest eine Schwenk-Antriebsanordnung 52 für eine lineare Verstellung eines mit dem Zahnriemen 41 des Fördermoduls 15 in Eingriff stehenden, kuppelbaren Mitnehmerelement 53 angeordnet, welches im gezeigten Ausführungsbeispiel durch einen mit einem Druckmedium beaufschlagbaren Linearstelltrieb 54 gebildet ist. Bevorzugt ist das Mitnehmerelement 53 in einen Riemenverbinder 55 einklinkbar und mit dem endlosen Zahnriemen 41 verbunden.

Über diesen Linearstelltrieb 54, der im Detail noch später beschrieben wird, und der kuppelbaren Antriebsverbindung mit dem Zahnriemen 41 erfolgt bei einer Verstellung des Mitnehmermittels 53 ein gemeinsames Schwenken sämtlicher Förderröllchen 14 von zumindest einer der Reihen 11.

Die bauliche Trennung zwischen dem Fördermodul 15 mit dem Schwenk-Übertragungsmittel 42, den Förderröllchen 14, der Treibwelle 44, dem Antriebs-Übertragungsmittel 43 und dem Basismodul 16 mit der Röllchen-Antriebsanordnung 51, der Schwenk-Antriebsanordnung 52 und dem Mitnehmermittel 53, ermöglicht ein Abnehmen des Fördermoduls 15 vom Basismodul 16 in seiner Gesamtheit, ohne Montageaufwand.

Damit wird eine vereinfachte Wartung oder im Bedarfsfall ein einfacher Tausch von Bauteilen erreicht, wobei die Antriebsverbindung für das Schwenken der Förderröllchen 14 und für den Antrieb der Treibwelle 44 ohne weitere Maßnahmen bzw. beim Einsetzen des Fördermoduls 15 in das Basismodul 16 selbsttätig erreicht wird.

Wie noch weiter der Fig. 4 zu entnehmen, ist nach einer möglichen Ausführungsform am Röllchenträger 34 ein Flansch 56 ausgebildet und mit diesem ein in Richtung der durch die Laufringe 49 der Tandemröllchen 30 gebildeten Förderebene hochgezogenes Abdeckelement 57 steckbar verbunden. Das Abdeckelement 57 weist außerdem an seiner Oberseite 58 einen kreisrunden Außenumfang auf.

An der Oberseite 58 sind entsprechend der Ausbildung des Tandemröllchens 30 zwei Durchbrüche 59, vorgesehen in denen die Tandemröllchen 30 mit ihren Laufringen 49 die Oberseite 58 des Abdeckelements 57 überragen. Ein Überstand der Laufringe 49 gegenüber der Oberseite 58 beträgt in etwa 2 mm bis 12 mm, bevorzugt 5 mm. Dieses Abdeckelement 57 bewirkt mit einem die Durchbrüche 59 trennenden Mittelsteg 60 eine Überdeckung des Übertragungsmittels 47 und vermindert somit ein mögliches Verletzungsrisiko. Darüber hinaus wird mit den Abdeckelementen 57 in Verbindung mit einer nicht weiter dargestellten Deckplatte des nach dem gezeigten Ausführungsbeispiel aus drei der Reihen 11 bestehenden Fördermoduls 15 eine Überdeckung und damit eine Verhinderung des Ansammelns von Abriebrückständen, Staub, Schmutz, etc. in der Transfer-Fördervorrichtung 1 erreicht.

Eine weitere Möglichkeit der Befestigung des Abdeckelements 57 auf dem Röllchenträger 34 ist beispielsweise durch Aufstecken über federnde Klammern an den Lagerfortsätzen 33 des Röllchenträgers 34, in denen die Tandemröllchen 30 gelagert sind, möglich. Bevorzugt werden die Abdeckelemente 57 als Kunststoffspritzteile gefertigt.

Selbstverständlich ist damit gewährleistet, dass die den kreisrunden Außenumriss aufweisenden Abdeckelemente 57 die Schwenkbewegung der Röllchenträger 34 mitvollziehen und die bereits vorher erwähnte Abdeckplatte entsprechende Durchbrüche aufweist, wodurch ein relativ geringer Spalt zwischen den Abdeckelementen 57 und den entsprechenden Durchbrüchen der Abdeckplatte erreicht wird.

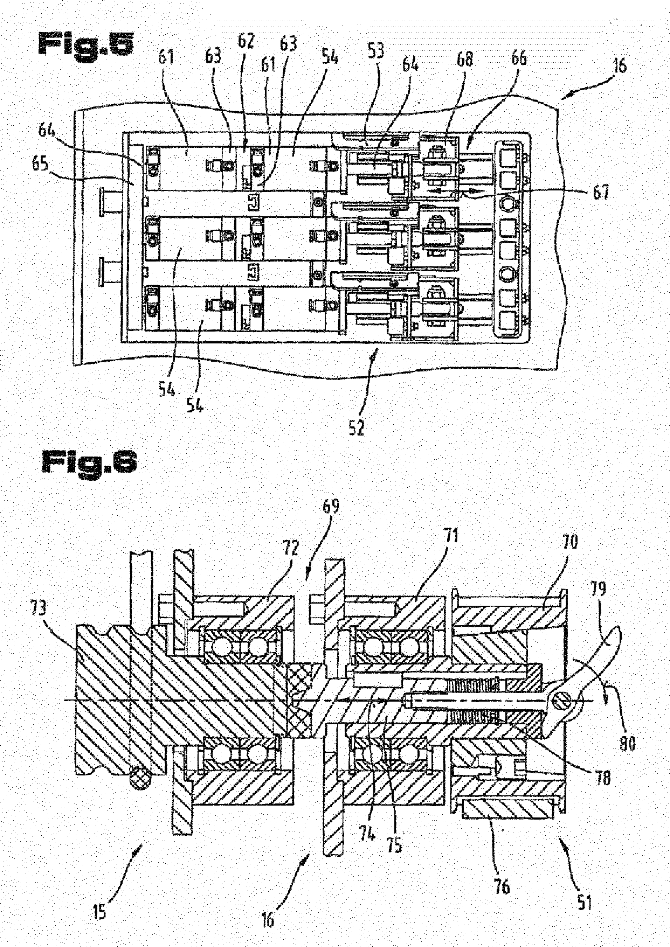

In der Fig. 5 ist ein Beispiel der im Basismodul 16 angeordneten Schwenk-Antriebsanordnung 52, bestehend aus drei Linearstelltrieben 54, zum Beispiel für drei der Reihen 11 der schwenkbaren Förderröllchen des Fördermoduls 15 - wie es in der Fig. 4 bereits beschrieben ist - gezeigt. Nach diesem Ausführungsbeispiel ist jeder Reihe 11 der Förderröllchen14 ein Linearstelltrieb 54 bzw. Stelltrieb zugeordnet und sind somit diese Förderröllchen 14 je Reihe 11 unabhängig voneinander schwenkbar.

Die drei Stellantriebe sind von ihrem mechanischen Aufbau gleich konzipiert und besteht jeder der Stellantriebe aus zwei doppelt wirkenden, mit einem Druckmedium beaufschlagbaren, bauformgleichen Zylindern 61, die zu einem Aktuator 62 an gegenüberliegenden Stirnflächen von Zylinderböden 63 in achsfluchtender Ausrichtung von Kolbenstangen 64 aneinander befestigt sind.

Eine der Kolbenstangen 64 ist in einem im Basismodul 16 feststehend angeordneten Widerlager 65 befestigt. Die weitere Kolbenstange 64 des weiteren Zylinders 61 ist an einem, den Mitnehmer 53 für die Antriebsverbindung mit dem Zahnriemen 41 aufweisenden, in einer linearen Führungsanordnung 66 - gemäß Doppelpfeil 67 - verstellbaren Schlitten 68 befestigt.

Die Ausbildung des Linearstelltriebes 54 mit den beiden Zylindern 61 ermöglicht mit entsprechender Ansteuerung der Zylinder 61 drei Stellungen für das Mitnehmermittel 53 und zwar eine Mittelstellung, wie der Fig. 5 zu entnehmen, bei der die Kolbenstange 64 eines der Zylinder 61 ausgefahren ist, und ausgehend von dieser zwei entgegen gesetzte Endstellungen, bei der die Kolbenstangen 64 beider Zylinder 61 ausgefahren, oder beide Kolbenstangen 64 der Zylinder 61 eingefahren sind.

Der Aktuator 62 kann aber auch eine Servo-Linearachse oder ein elektrischer Spindelantrieb sein.

Der gewünschte Schwenkwinkel, um den die schwenkbaren Förderröllchen 14 insgesamt zwischen den entgegengesetzten Endstellungen verschwenkbar sein sollen, richtet sich nach der Auslegung des Hubes des Zylinders 61 sowie dem Übersetzungsverhältnis zwischen Zahnriemenhub und dem Zahn-Mittendurchmesser des am Röllchenträger 34 angeordneten Zahnringes 40.

Dem Schwenkwinkel sind durch die in den Endstellungen auftretenden Verschränkung der Antriebsstränge der Übertragungsmittel 47 für die Übertragung des Antriebsdrehmomentes auf das Förderröllchen 14 Grenzen gesetzt, jedoch ist es aufgrund der Elastizität des Übertragungsmittels 47 durchaus möglich, einen gesamten Schwenkwinkel zwischen den entgegengesetzten Endstellungen von nahezu 180° zu erreichen.

Es soll auch noch darauf hingewiesen werden, dass durchaus ein einziger Aktuator 62 auch für mehrere der Reihen 11 dann ausreichend ist, wenn die Förderröllchen 14 dieser Reihen 11 gemeinsam um einen jeweils gleichen Schwenkwinkel verstellbar sind. Bei einer derartigen Ausbildung werden mehrere, der mit den Mitnehmermittel 53 versehenen Schlitten 68 bewegungsverbunden und durch einen Aktuator 62 betätigt.

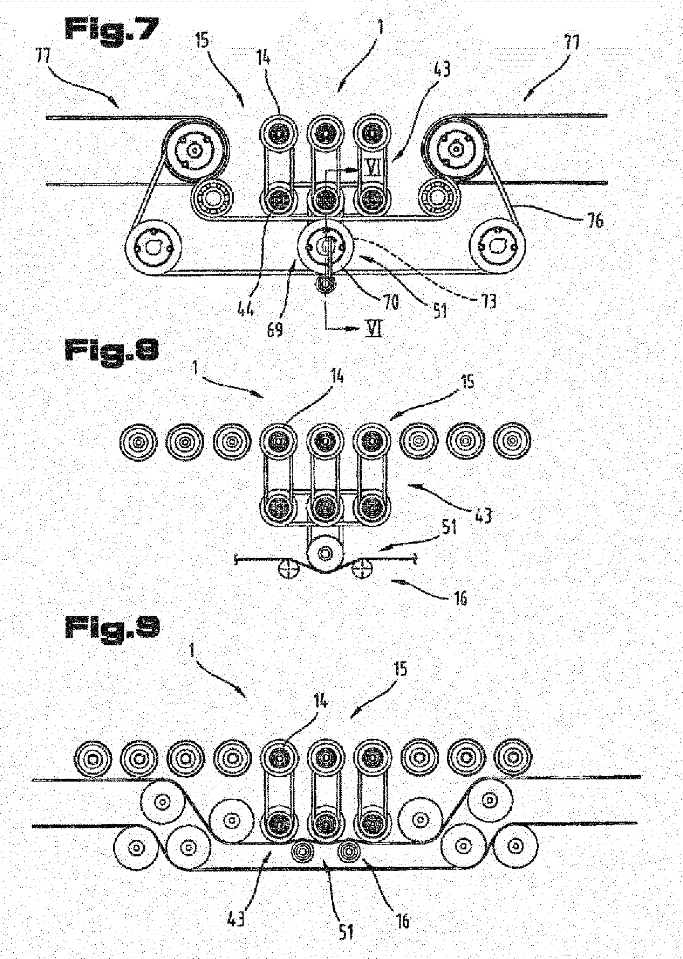

In den Fig. 6 und 7 ist eine Ausbildung für eine kuppelbare Antriebsverbindung zwischen der im Basismodul 16 vorgesehenen Röllchen-Antriebsanordnung 51 und den im Fördermodul 15 angeordneten Antriebs-Übertragungsmitteln 43 mit einer manuell lösbaren, federbelasteten Kupplung 69 vorzugsweise mit Klaueneingriff für die Antriebsübertragung.

Fig. 6 zeigt dabei die Kupplung 69 in Eingriffsstellung, die dann erreicht ist, wenn das Fördermodul 15 in seiner Position im Basismodul 16 fixiert ist und über die Kupplung 69 eine Antriebsverbindung zwischen einer Antriebsscheibe 70, welche in einem am Basismodul 16 angeordneten ersten Kupplungsgehäuse 71 drehbar gelagert ist, und einer Übertriebsrolle 73 der Antriebs-Übertragunsgsmittel 43, welche in einem am Fördermodul 15 befestigten weiteren Kupplungsgehäuse 72 drehbar gelagert ist, besteht.

Eine Kupplungsverbindung zwischen der Antriebsscheibe 70 und der Übertriebsrolle 73 erfolgt über einen stirnseitigen Klaueneingriff zwischen der Übertriebsrolle 73 und einem in Achsrichtung - gemäß Doppelpfeil 74 - verstellbaren Kupplungsbolzen 75, der mit der Antriebsscheibe 70 drehverbunden ist und in Eingriffsstellung über eine Federvorspannung über einen stirnseitigen Klaueneingriff mit der drehbar im Kupplungsgehäuse 72 angeordneten Übertriebsrolle 73 zusammen wirkt.

Wie dem Ausführungsbeispiel zu entnehmen, erfolgt beispielsweise der Antrieb der Antriebsscheibe 70 durch eine Riemenanordnung 76 mit einem umlaufenden Riemen, ausgehend von beidseits der Transfer-Fördervorrichtung 1 angeordneten und angetriebenen Bandförderern 77 (Fig. 7).

Im eingekuppelten Zustand der Kupplung 69 erfolgt die weitere Antriebsverbindung über die Übertriebsrolle 73 bzw. Übertriebswelle mit den bereits in den vorhergehenden Figuren beschriebenen Antriebs-Übertragungsmitteln 43, welche je Reihe 11 der Förderröllchen 14 die Treibwelle 44 und die Antriebsverbindung der Treibwelle 44 mit den Förderröllchen 14 als Übertragungsmittel 47 aufweisen.

Ein Entkuppeln der Antriebsverbindung erfolgt beispielsweise durch Verstellung des Kupplungsbolzens 75 entgegen der Wirkung, beispielsweise einer Spiraldruckfeder 78 oder einem Tellerfederpaket durch Betätigung eines Nockenhebels 79 in Richtung eines Pfeiles 80, wodurch die stirnseitige Klauenverbindung zwischen dem Kupplungsbolzen 75 und der Übertriebsrolle 73 gelöst wird und damit das Fördermodul 15 vom Basismodul 16 entnommen werden kann.

An dieser Stelle sei weiters erwähnt, dass eine derartige Kupplungsanordnung auch zwischen einem nicht weiter gezeigten, am Basismodul 16 angeordneten Elektromotor und der am Fördermodul 15 angeordneten Übertriebsrolle 73 bzw. Übertriebswelle in dazu angepasster, konstruktiver Ausbildung der Kupplung für eine lösbare Antriebsverbindung zwischen dem Basismodul 16 und dem Fördermodul 15 selbstverständlich möglich ist.

Die Fig. 8 und 9 zeigen weitere mögliche Antriebsvarianten für eine lösbare Antriebsverbindung zwischen der im Basismodul 16 angeordneten Röllchen-Antriebsanordnung 51 und den im Fördermodul 15 angeordneten Antriebs-Übertragungsmitteln 43 der erfindungsgemäßen Transfer-Fördervorrichtung 1.

Nach diesen Lösungen werden vorhandene Antriebe im Fördersystem für den Röllchenantrieb der Transfer-Fördervorrichtung 1 sehr wirtschaftlich genutzt und wird auch die Trennung des Fördermoduls 15 vom Basismodul 16 in einfachster Weise erreicht.

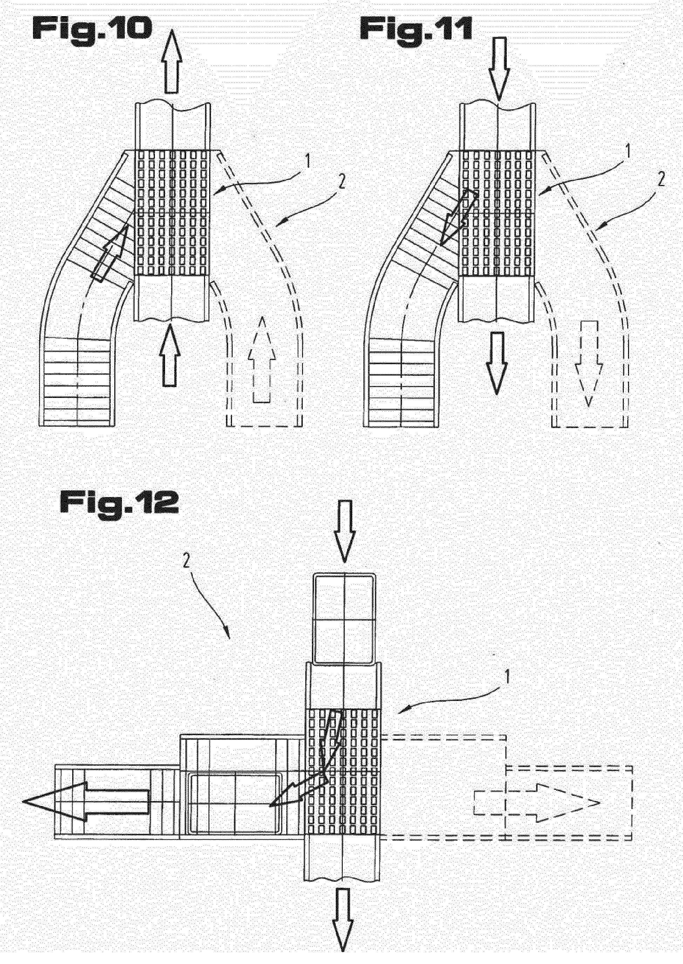

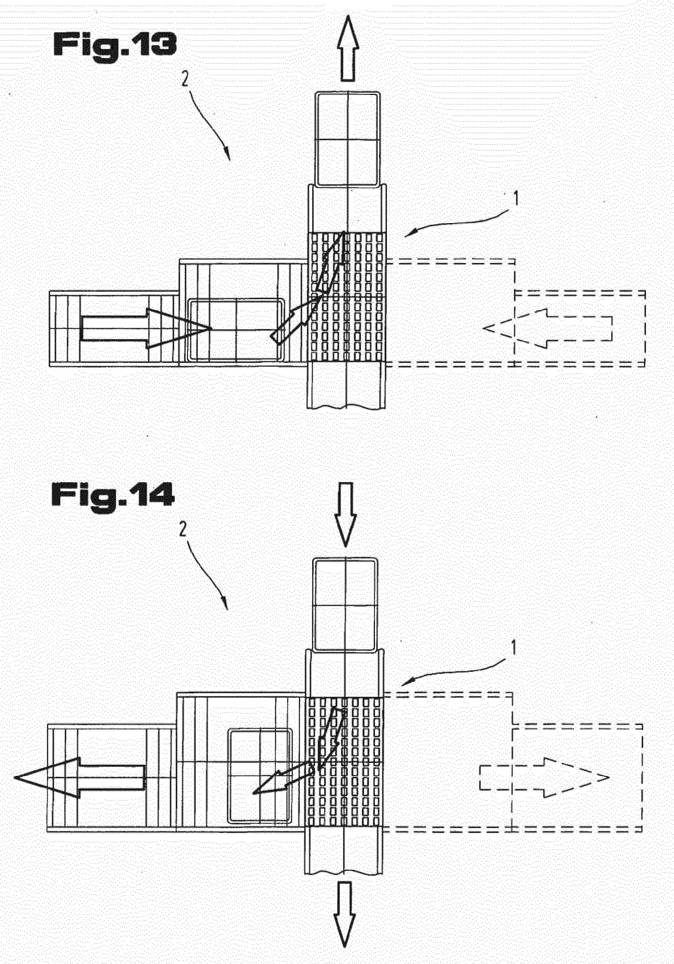

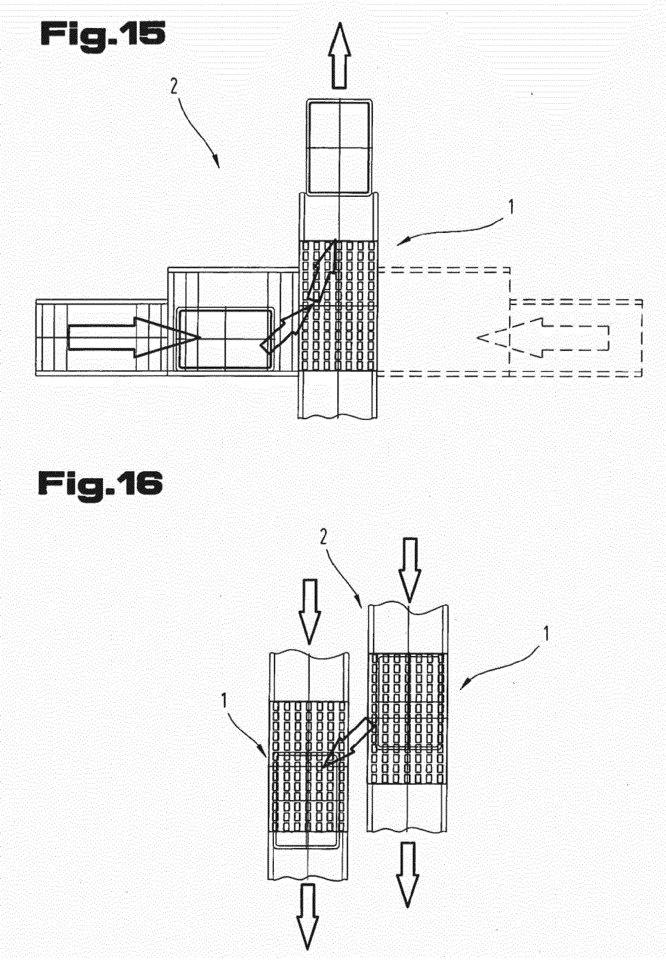

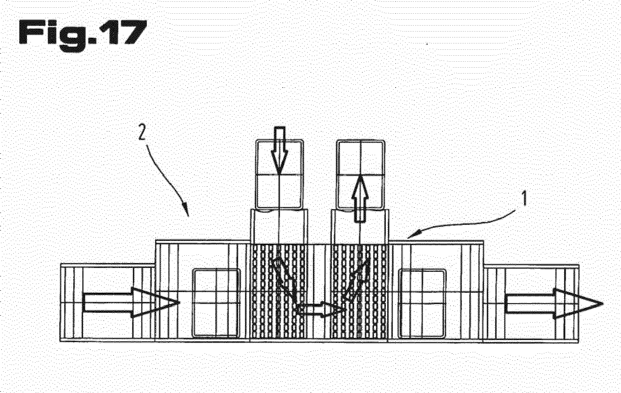

Durch den modulartigen Aufbau der Transfer-Fördervorrichtung 1, sind an die Transporterfordernisse sowie an das jeweils dazu konzipierte Fördersystem 2 anpassungsfähige Varianten möglich, wie beispielshaft in vereinfachter Darstellung in den Fig. 10 bis 17 gezeigt. Es sind Lösungen für Ein- und Ausschleusungen in den verschiedensten Winkelgraden beidseits bis nahezu 90° möglich.

Es können weiters Ein- und Ausschleusungen wie "längs/längs" sowie "längs/quer" ebenso realisiert werden wie auch eine "Parallelversetzung" des Transportguts zwischen parallelen Förderwegen sowie auch "Parallelversetzung mit Umkehr der Förderrichtung" und "Durchfördern von einer Einschleuse- auf eine Ausschleusebahn".

Die Ausführungsbeispiele zeigen mögliche Ausführungsvarianten der Transfer-Fördervorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Transfer-Fördervorrichtung 1 diese bzw. deren Bestandteile teilweise unmaßstäblich und/oder vergrößert und/oder verkleinert dargestellt wurden.

Vor allem können die einzelnen in den Fig. 1 bis 16 gezeigten Ausführungen im Rahmen der in den Ansprüchen gekennzeichneten Ausbildungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Transfer-Fördervorrichtung | 41 | Zahnriemen |
| 2 | Fördersystem | 42 | Schwenk-Übertragungsmittel |
| 3 | Transportgut | 43 | Antriebs-Übertragungsmittel |
| 4 | Doppelpfeil | 44 | Treibwelle |
| 5 | Rollenförderer | 45 | Drehachse |
| | | | |
| 6 | Rollenförderer | 46 | Ebene |
| 7 | Doppelpfeil | 47 | Übertragungsmittel |
| 8 | Doppelpfeil | 48 | Bohrung |
| 9 | Rollenbahnschleuse | 49 | Laufring |
| 10 | Rollenbahnschleuse | 50 | Nut |
| | | | |
| 11 | Reihe | 51 | Röllchen-Antriebsanordnung |
| 12 | Förderbreite | 52 | Schwenk-Antriebsanordnung |
| 13 | Förderebene | 53 | Mitnehmermittel |
| 14 | Förderröllchen | 54 | Linearstelltrieb |
| 15 | Fördermodul | 55 | Riemenverbinder |
| | | | |
| 16 | Basismodul | 56 | Flansch |
| 17 | Seitenschenkel | 57 | Abdeckelement |
| 18 | Seitenschenkel | 58 | Oberseite |
| 19 | Traggestell | 59 | Durchbruch |
| 20 | Stirnblech | 60 | Mittelsteg |
| | | | |
| 21 | Stirnblech | 61 | Zylinder |
| 22 | Tragleiste | 62 | Aktuator |
| 23 | Positionierfläche | 63 | Zylinderboden |
| 24 | Positionierfläche | 64 | Kolbenstange |
| 25 | Positionierkulisse | 65 | Widerlager |
| | | | |
| 26 | Positionierkulisse | 66 | Führungsanordnung |
| 27 | Befestigungsmittel | 67 | Doppelpfeil |
| 28 | Befestigungsmittel | 68 | Schlitten |
| 29 | Mittelabstand | 69 | Kupplung |
| 30 | Tandemröllchen | 70 | Antriebsscheibe |
| | | | |
| 31 | Bohrung | 71 | Kupplungsgehäuse |
| 32 | Lagerbüchse | 72 | Kupplungsgehäuse |
| 33 | Lagerfortsatz | 73 | Übertriebsrolle / Übertriebswelle |
| 34 | Röllchenträger | 74 | Doppelpfeil |
| 35 | Schwenkachse | 75 | Kupplungsbolzen |
| | | | |
| 36 | Lagerzapfen | 76 | Riemenanordnung |
| 37 | Lagerschenkel | 77 | Bandförderer |
| 38 | Lagerschenkel | 78 | Spiraldruckfeder |
| 39 | Drehachse | 79 | Nockenhebel |
| 40 | Zahnring | 80 | Pfeil |

## Patentansprüche

1. Transfer-Fördervorrichtung (1) mit einem Fördermodul (15), einem Basismodul (16), eine Förderebene (13) ausbildenden Förderröllchen (14) für den Transport eines Transportguts (3) in eine Hauptförderrichtung oder eine Nebenförderrichtung, einer Schwenk-Antriebsanordnung (52) und einem Schwenk-Übertragungsmittel (42) zum Schwenken der Förderröllchen (14) um zur Förderebene (13) senkrecht verlaufenden Schwenkachsen (35) und einer Röllchen-Antriebsanordnung (51) und einem Antriebs-Übertragungsmittel (43) zum Antrieb der Förderröllchen (14), wobei jedes Förderröllchen (14) über einen Lagerzapfen (36) zwischen Lagerschenkel (37) eines um die Schwenkachse (35) schwenkbaren Röllchenträgers (34) gelagert und um eine zur Schwenkachse (35) senkrecht ausgerichtete Drehachse (39) drehbar ist und wobei das Fördermodul (15) mit dem Basismodul (16) trennbar verbunden ist, welches Basismodul (16) die Schwenk-Antriebsanordnung (52) und die Röllchen-Antriebsanordnung (51) umfasst, wobei ein Traggestell (19) zumindest eine quer zur Hauptförderrichtung angeordnete Reihe (11) von Förderröllchen (14), das Schwenk-Übertragungsmittel (42) zum Schwenken der Förderröllchen (14) in dieser Reihe (11) und das Antriebs-Übertragungsmittel (43) zum Antrieb der Förderröllchen (14) in dieser Reihe (11) das Fördermodul (15) ausbildet,
**dadurch gekennzeichnet, dass**
das Traggestell (19) zwischen Seitenschenkel (17, 18) des Basismoduls (16) positionierte und mit diesen lösbar verbundene Stirnbleche (20, 21) sowie eine zwischen diesen erstreckende Tragleiste (22) umfasst, und
das Antriebs-Übertragungsmittel (43) zum Antrieb der Förderröllchen (14) eine Treibwelle (44) und Übertragungsmittel (47) umfasst, wobei sich die Treibwelle (44) an einer Unterseite der Tragleiste (22) zwischen den Stirnblechen (20, 21) des Traggestells (19) erstreckt und an den Stirnblechen (20, 21) gelagert ist, und
das Basismodul (16) entweder einen Elektromotor oder eine Antriebsscheibe (70) umfasst, wobei die Antriebsscheibe (70) in einem am Basismodul (16) angeordneten Kupplungsgehäuse (71) drehbar gelagert ist, und dass
a) entweder die Treibwelle (44) über eine mechanische Kupplung (69) lösbar mit einer Antriebsscheibe (70) antriebsverbunden ist,
b) oder das Fördermodul (15) zusätzlich eine Übertriebsrolle (73) umfasst, welche in einem am Fördermodul (15) angeordneten Kupplungsgehäuse (72) drehbar gelagert und über einen umlaufenden Riemen mit der Treibwelle (44) gekuppelt ist, wobei die Übertriebsrolle (73) über eine mechanische Kupplung (69) lösbar mit der Antriebsscheibe (70) oder lösbar mit dem Elektromotor antriebsverbunden ist.

2. Transfer-Fördervorrichtung (1) nach Anspruch 1, **dadurch gekennzeichnet, dass** das Fördermodul (15) mehrere parallele und zueinander gering beabstandete, über eine Förderbreite (12) erstreckende Reihen (11) von Förderröllchen (14) aufweist.

3. Transfer-Fördervorrichtung (1) nach Anspruch 2, **dadurch gekennzeichnet, dass** den Reihen (11) eine gemeinsame, mit den Antriebs-Übertragungsmitteln (43) kuppelbare Röllchen-Antriebsanordnung (51) im Basismodul (16) zugeordnet ist.

4. Transfer-Fördervorrichtung (1) nach Anspruch 2, **dadurch gekennzeichnet, dass** den Reihen (11) eine gemeinsame, mit den Schwenk-Übertragungsmitteln (42) kuppelbare Schwenk-Antriebsanordnung (52) im Basismodul (16) zugeordnet ist.

5. Transfer-Fördervorrichtung (1) nach Anspruch 1, **dadurch gekennzeichnet, dass** das Fördermodul (15) und das Basismodul (16) zusammenwirkende, kulissenförmige Zentriermittel (25) und Verbindungsmittel aufweisen.

6. Transfer-Fördervorrichtung (1) nach Anspruch 1, **dadurch gekennzeichnet, dass** die Tragleiste (22) mit Bohrungen (31) und in diesen angeordneten Lagerbüchsen (32) jeweils zur schwenkbaren Lagerung eines Röllchenträgers (34) mit einem rohrförmigen Lagerfortsatz (33) versehen ist, wobei der Lagerfortsatz (33) jedes Röllchenträgers (34) aus der Lagerbüchse (32) an einer Unterseite der Tragleiste (22) herausragt und an seinem herausragenden Endbereich mit einem Zahnring (40) antriebsverbunden ist, und dass die Zahnringe (40) in dieser Reihe (11) über einen gemeinsamen, mit den Zahnringen (40) in Eingriff stehenden Zahnriemen (41) antriebsverbunden sind.

7. Transfer-Fördervorrichtung (1) nach Anspruch 6, **dadurch gekennzeichnet, dass** der Zahnriemen (41) über einen Riemenverbinder mit einem die Schwenk-Antriebsanordnung (52) aufweisenden Mitnehmermittel (53) gekuppelt ist.

8. Transfer-Fördervorrichtung (1) nach Anspruch 1, **dadurch gekennzeichnet, dass** die Schwenk-Antriebsanordnung (52) durch einen Linearstelltrieb (54) gebildet ist.

9. Transfer-Fördervorrichtung (1) nach Anspruch 8, **dadurch gekennzeichnet, dass** eine Übersetzung eines Verstellweges zwischen Endstellungen des Linearstelltriebes (54) für einen Schwenkwinkel der Förderröllchen (14) um die Schwenkachse (35) für etwa 180° ausgelegt ist.

10. Transfer-Fördervorrichtung (1) nach Anspruch 1, **dadurch gekennzeichnet, dass** die Treibwelle (44) mit jeweils den Schwenkachsen (35) der Röllchenträger (34) zugeordnete, ringförmige Einschnürungen umfasst und die Förderröllchen (14) jeweils als zwei Laufringe (49) aufweisende Tandemröllchen (30) mit zwischen den Laufringen (49) ringförmig ausgebildeter Nut (50) gebildet sind, wobei die Tandemröllchen (30) mit der Treibwelle (44) über jeweils an den Nuten (50) und den Einschnürungen geführte endlose, schnurförmige Übertragungsmittel (47) gekuppelt sind.

11. Transfer-Fördervorrichtung (1) nach Anspruch 1, **dadurch gekennzeichnet, dass** die Antriebsscheibe (70) mit einem in axialer Richtung im Kupplungsgehäuse (71) verstellbar gelagerten Kupplungsbolzen (75) antriebsverbunden ist.

12. Transfer-Fördervorrichtung (1) nach Anspruch 1, **dadurch gekennzeichnet, dass** der Kupplungsbolzen (75) und die Übertriebsrolle (73) bevorzugt über eine stirnseitige Klauenverbindung kuppelbar sind.

13. Transfer-Fördervorrichtung (1) nach Anspruch 12, **dadurch gekennzeichnet, dass** der Kupplungsbolzen (75) über eine Federanordnung in Eingriffsstellung der Klauenverbindung vorgespannt ist.

14. Transfer-Fördervorrichtung (1) nach Anspruch 1, **dadurch gekennzeichnet, dass** das Förderröllchen (14) ein zwei Laufringe (49) aufweisendes Tandemröllchen (30) mit zwischen den Laufringen (49) ringförmig ausgebildeter Nut (50) für ein schnurförmiges Übertragungsmittel (47) ist und dass am Röllchenträger (34) ein Abdeckelement (57) angeordnet ist, das mit Durchbrüchen (59) für einen Überstand eines Teilbereiches der Laufringe (49) des Tandemröllchens (30) versehen ist.

15. Fördersystem für den Transport von Transportgütern (3) mit einer Transfer-Fördervorrichtung (1), einem dieser vorgeordneten, angetriebenen Förderer (77) und einem dieser nachgeordneten, angetriebenen Förderer (77), **dadurch gekennzeichnet, dass** die Transfer-Fördervorrichtung (1) nach Anspruch 1 ausgebildet ist, wobei die Antriebsscheibe (70) über eine Riemenanordnung (76) mit den vorgeordneten und nachgeordneten, angetriebenen Förderern (77), z.B. Bandförderer, Rollenförderer, antriebsverbunden ist.
